# EUROPÄISCHE PATENTSCHRIFT

(11) **EP 3 218 171 B1**
(45) Veröffentlichungstag und Bekanntmachung des Hinweises auf die Patenterteilung: **16.06.2021**
(21) Anmeldenummer: 15784330.1
(22) Anmeldetag: 19.10.2015
(51) Int. Cl.: B29C 70/34, B29C 51/08

(54) **VERFAHREN ZUR HERSTELLUNG EINES FASERVERBUNDFORMTEILS UND FASERVERBUNDFORMTEIL**
METHOD FOR PRODUCING A FIBER COMPOSITE MOLDING AND FIBER COMPOSITE MOLDING
PROCÉDÉ DE FABRICATION D'UNE PIÈCE COMPOSITE RENFORCÉE PAR DES FIBRES ET PIÈCE COMPOSITE RENFORCÉE PAR DES FIBRES

(30) Priorität: 14.11.2014 DE 102014223271
(43) Veröffentlichungstag der Anmeldung: 20.09.2017
(73) Patentinhaber: Bayerische Motoren Werke Aktiengesellschaft, 80809 München (DE); GELITA AG, 69412 Eberbach (DE)
(72) Erfinder: WIMMER, Siegfried, 85622 Feldkirchen (DE); REIHMANN, Matthias, 69502 Hemsbach (DE)
(74) Vertreter: Hoefer & Partner Patentanwälte mbB
(86) Internationale Anmeldenummer: PCT/EP2015/074121
(87) Internationale Veröffentlichungsnummer: WO 2016/074884

(56) Entgegenhaltungen:
- US-A1- 2003 143 366
- Y. Z. WAN ET AL: "Carbon fiber-reinforced gelatin composites. I. Preparation and mechanical properties", JOURNAL OF APPLIED POLYMER SCIENCE, Bd. 75, Nr. 8, 22. Februar 2000 (2000-02-22), Seiten 987-993, XP055240556, US ISSN: 0021-8995, DOI: 10.1002/(SICI)1097-4628(20000222)75:8<987: :AID-APP2>3.0.CO;2-2

## Beschreibung

Die vorliegende Erfindung betrifft ein Verfahren zur Herstellung eines Faserverbundformteils unter Verwendung nachhaltig gewonnener Werkstoffe sowie ein Faserverbundformteil, das ein Matrixmaterial aus nachwachsenden Rohstoffen enthält.

Faserverbundformteile sind in unterschiedlichen Ausführungsformen aus dem Stand der Technik bekannt. Aufgrund ihrer hohen mechanischen Stabilität, ihrer Festigkeit und Steifigkeit bei geringem Eigengewicht, finden Faserverbundformteile vielfach Anwendung im Kraftfahrzeugbau und Flugzeugbau. Üblicherweise werden Faserverbundformteile aus Fasermaterialien hergestellt, die mit einem Matrixmaterial, meist einem synthetischen Polymer, getränkt, umgeformt und dann gehärtet werden. Die meisten herkömmlich verwendeten Matrixmaterialien oder Harze sind aufgrund ihrer synthetischen Natur schlecht biologisch abbaubar, was ein Recycling der Faserverbundformteile und Produktionsabfälle erschwert und ihre Anwendung unter Umweltschutzaspekten in Frage stellt.

Y.Z.Wan et al.: "Carbon-fiber-reinforced gelatin composites, I. Prepatation and mechanical properties, JOURNAL OF APPLIED POLYMER SCIENCE, Bd. 75, Nr. 8, 22. Februar 2000, Seiten 987-993, beschreibt die Herstellung von Kohlenstofffaser-verstärkten Composites unter Verwendung von bioabbaubaren Polymeren. Hierzu wird eine Gelatinelösung bei 60-70 °C hergestellt, der Glycerin und Glutaraldehyd als Vernetzer zugesetzt wird.

US 2003/143366 A1 beschreibt ein polymeres und faserhaltiges Laminat, das aus Polyolefinharz mit einem Füllstoff wie zermahlenes Glas, Polypropylen, Urethan und dergleichen besteht, und das gemischt und erhitzt wird, um eine gelatinöse Masse zu bilden.

Ausgehend von diesem Stand der Technik ist es daher Aufgabe der vorliegenden Erfindung ein Verfahren zur Herstellung eines Faserverbundformteils anzugeben, das unter Verwendung von nachwachsenden Rohstoffen leicht umsetzbar und sicher in der Anwendung ist. Ferner ist es Aufgabe der vorliegenden Erfindung ein nachhaltig hergestelltes, umweltfreundliches Faserverbundformteil bereitzustellen sowie auch eine Verwendung für fotografische Gelatine anzugeben.

Die Aufgabe wird bei einem in den Ansprüchen definierten Verfahren zur Herstellung eines Faserverbundformteils erfindungsgemäß durch die Schritte i) Aufbringen eines gelatinehaltigen Matrixmaterials auf ein Fasermaterial, wobei das gelatinehaltige Matrixmaterial fotografische Gelatine enthält, die ein mittleres Molekulargewicht von etwa 100.000 bis 200.000 Dalton, einen Bloomwert von etwa 260 bis 280 g und kontrollierte Calciumwerte von 0 bis etwa 4000 ppm aufweist, ii) Umformen des mit Matrixmaterial versehenen Fasermaterials und iii) Härten des mit Matrixmaterial versehenen Fasermaterials gelöst. Erfindungswesentlich ist hierbei insbesondere die Verwendung eines gelatinehaltigen Matrixmaterials, das fotografische Gelatine enthält. Das gelatinehaltige Matrixmaterial enthält als Hauptbestandteil bezogen auf das Gesamtgewicht des Matrixmaterials Gelatine und hierunter fotografische Gelatine. Daneben können weitere härtbare Matrixmaterialien verwendet werden oder ggf. auch Additive, wie Härter oder auch Weichmacher oder dergleichen, zugesetzt werden, die die Verarbeitung des gelatinehaltigen Matrixmaterials erleichtern. Besonders bevorzugt wird Gelatine, und hierunter fotografische Gelatine, als alleiniges Matrixmaterial eingesetzt. Gelatine ist ein hydrolysiertes Kollagen, besteht aus verschiedenen Proteinketten und fällt bei der Schlachtung von Tieren an. Die Schlachtung der Tiere dient hauptsächlich der Nahrungsmittelerzeugung (Fleischgewinnung) und nicht der Gewinnung von Nebenprodukten, z.B. tierischen Fetten, Fleischknochenmehl oder auch Gelatine. Gelatine wird daher als nachwachsender Rohstoff angesehen, ist dermatologisch gut verträglich, frei von Allergenen und Schadstoffen und hat auch schützende Eigenschaften, sodass die Belastung von Personen, die mit dem Verfahren befasst sind, minimiert ist. Das erfindungsgemäße Verfahren ist damit aus toxikologischer Sicht anwendungsfreundlich und unbedenklich. Gelatine ist gut biologisch abbaubar, sodass ein Recycling oder eine Entsorgung unproblematisch ist. Anfallende Produktionsabfälle können ohne aufwendige Aufreinigung sehr einfach entsorgt werden. Daneben hat Gelatine aber noch weitere spezifisch für das Verfahren vorteilhafte Eigenschaften. So hat sich gezeigt, dass gelatinehaltige Matrixmaterialien bei relativ niedrigen Temperaturen von ca. 60 °C aufschmelzen. Damit wird innerhalb kurzer Prozesslaufzeiten schnell und mit geringem Aufwand eine gute Verteilung des Matrixmaterials sowohl in der verwendeten Form als auch im Fasermaterial erzielt, was die Homogenität des hergestellten Faserverbundformteils bei geringem technischem Aufwand erhöht. Durch den abschließenden Härteschritt erhält das Faserverbundformteil seine endgültige Form. Auch hier zeigt sich ein weiterer Vorteil der Verwendung von gelatinehaltigem Matrixmaterial, denn ein Setting bzw. ein Aushärten erfordert, im Vergleich zu herkömmlichen Matrixmaterialien, nur eine sehr kurze Reaktionszeit. Nicht zuletzt durch die niedrigen Rohstoffpreise für Gelatine ist durch das erfindungsgemäße Verfahren ein Faserverbundformteil auf einfache Art und Weise ohne hohen technischen Aufwand kostengünstig herstellbar.

Die Unteransprüche beinhalten vorteilhafte Weiterbildungen und Ausgestaltungen der Erfindung.

Je nach Verarbeitungsverfahren kann das gelatinehaltige Matrixmaterial in unterschiedlicher Form eingesetzt werden. Bevorzugte Formen der Gelatine sind die Pulverform, Gelatine als Lösung, als Dispersion oder als Folie. Die hier genannten Formen der Gelatine lassen sich sehr gut in gewünschter Menge auf das Fasermaterial aufbringen. Besonders bevorzugt ist ein gelatinehaltiges Matrixmaterial in Form einer Folie. Hierdurch wird das erfindungsgemäße Verfahren stark vereinfacht. Die Folien können bereits vor dem Aufbringen auf das Fasermaterial in Form und Größe zugeschnitten werden, sind trocken und damit gut bevorratbar. Auch ist die Herstellung eines Lagenverbundes aus gelatinehaltiger Folie und Fasermateriallage vor dem Umformen leicht möglich. Die aufwendige Umsetzung von flüssigen Matrixmaterialien, wie beispielsweise bei der Harzinjektion oder Harzinfiltration, entfallen. Die vorbereitenden Prozessschritte sind damit einfacher durchführbar. Die Verwendung von gelatinehaltigen Folien ermöglicht somit die Herstellung eines Faserverbundformteils mit gleichbleibend guter Qualität bei kurzen Prozesszeiten. Etwaige additive Matrixmaterialien oder Zusätze können besonders gut in die gelatinehaltige Folie integriert oder auf deren Oberfläche abgeschieden werden. Zudem wird durch die Bereitstellung des Matrixmaterials in Form einer Folie eine homogene Verteilung beim Pressvorgang sichergestellt.

Besonders vorteilhaft wird das Aufbringen des gelatinehaltigen Matrixmaterials auf das Fasermaterial durch abwechselndes übereinander Schichten von Fasermateriallagen und gelatinehaltigen Lagen ausgeführt. Vorteilhafterweise werden die außenliegenden Lagen dabei durch gelatinehaltige Lagen bzw. Folien gebildet. So wird ein Lagenstapel aus Fasermateriallagen und Matrixmateriallagen erhalten, der sehr gut bevorratbar ist. Durch die Vororientierung der Fasermateriallagen können die Prozesszeiten weiter verkürzt werden. Auch wird somit eine Qualitätskontrolle der Faserorientierung vor der finalen Formgebung erleichtert, so dass der Materialausschuss minimiert wird.

Prinzipiell ist der Formgebungsprozess nicht beschränkt und umfasst herkömmliche Pressvorgänge, wie sie beispielsweise beim Nasspressverfahren oder Prepregverfahren zur Anwendung kommen. Besonders einfach wird das Umformen durch Tiefziehen ausgeführt. Hierbei können konventionelle Aluminiumpressformen verwendet werden, so dass der technische Aufwand gering ist.

Vorteilhaft ist eine Kombination der Verwendung von gelatinehaltigen Folien als Matrixmaterial mit einer Umsetzung in einem Tiefziehverfahren zur Formgebung, da somit die Herstellung des Faserverbundformteils in einem kontinuierlichen Prozess stattfinden kann. Ein Werkzeugwechsel ist nicht nötig. Ferner entfallen Einspritzvorgänge für beispielsweise eine Harzinjektion oder Handlamination. Der Prozess wird vollkommen trocken ausgeführt, was zudem den Reinigungsaufwand minimiert. So kann ein wie vorstehend beschriebener Lagenstapel in einem vorgesehenen Werkzeug umgeformt und ausgehärtet werden. Eine separate Zuführung von Matrixmaterial und Fasermaterial ist nicht notwendig. Das Verfahren ist damit maximal zweistufig (einlegen des Lagenstapels und umformen desselben mit Härten), was die Herstellungskosten reduziert.

Eine homogene Verteilung des gelatinehaltigen Matrixmaterials wird dadurch verbessert, dass das Matrixmaterial vor dem Umformen aufgeschmolzen wird. Das Aufschmelzen erfolgt, je nach Wassergehalt sowie Art und Menge der Zuschläge (z.B. Weichmacher oder Härter) der Gelatine bei Temperaturen zwischen 30 und 80 °C, insbesondere bei einer Temperatur zwischen 50 °C und 70 °C. Im geschmolzenen Zustand kann das Matrixmaterial das Fasermaterial sehr gut penetrieren, was den Faserverbund verstärkt.

Das Härten wird vorteilhafterweise bei einer Temperatur von bis zu 300 °C ausgeführt. Somit erhält das Faserverbundformteil seine endgültige Form. Während des Härtens kann die Gelatine beispielsweise mit optional zugesetzten Härtern reagieren. Zur Reduktion der Prozesskosten wird das Härten insbesondere bei einer Temperatur zwischen 150 °C und 280 °C und weiter vorteilhaft bei etwa 200 °C ausgeführt. Vor dem Härten wird bevorzugt ein Trocknungsschritt durchgeführt, bei dem zunächst der Hauptanteil des gebundenen Wassers aus der Matrix bei 100 bis 150 °C entfernt wird. Der darauffolgende Härteschritt wird bevorzugt bei 200 °C durchgeführt, da die thermische Zersetzung von wasserfreier Gelatine bei etwa 210 °C beginnt (vollständige Zersetzung bei 350 bis 400 °C). Zwischen dem Trocknen und dem Härten können kurzzeitig Temperaturen von bis zu 300 °C angewendet werden, um das Trocknen und Härten zu beschleunigen.

Das erfindungsgemäße Verfahren eignet sich insbesondere zur Herstellung von Kohlenstofffaserverbundformteilen (CFK-Formteilen).Als Gelatine wird fotografische Gelatine verwendet.

Ebenfalls erfindungsgemäß wird auch ein Faserverbundformteil beschrieben. Das Faserverbundformteil ist insbesondere als Tiefziehfaserverbundformteil ausgebildet und umfasst ein Fasermaterial und ein Matrixmaterial. Hierbei wird unter einem Fasermaterial ein einziges Fasermaterial oder aber eine Mischung aus unterschiedlichen Fasermaterialien verstanden. Als Matrixmaterial wird ein Matrixmaterial verwendet, wobei das Matrixmaterial fotografische Gelatine enthält, die ein mittleres Molekulargewicht von etwa 100.000 bis 200.000 Dalton, einen Bloomwert von etwa 260 bis 280 g und kontrollierte Calciumwerte von 0 bis etwa 4000 ppm aufweist. Hierunter wird ein Matrixmaterial verstanden, das Gelatine als Hauptbestandteil, bezogen auf das Gesamtgewicht des Matrixmaterials, enthält. Die erfindungsgemäß verwendete Gelatine kann aus dem Bindegewebe oder aus Knochen von verschiedenen Tierarten gewonnen werden, insbesondere aus der Haut oder den Knochen von Schweinen oder Rindern oder auch von Geflügel oder Fischen. Weitere herkömmliche Matrixmaterialien können vorhanden sein. Ihr Gehalt ist aber vorzugweise möglichst gering. Ferner kann das Matrixmaterial Additive enthalten, die das Matrixmaterial beispielsweise stabilisieren oder die Härtung desselben erleichtert, z.B. ein Zusatz von thermolabilen Härtern. Als Gelatine wird eine fotografische Gelatine verwendet. Fotografische Gelatine ist für die großindustrielle Fertigung von mehrlagigen Schichten und die Reaktion mit chemischen Härtern bekannt und optimiert. Typische erfindungsgemäß verwendete fotographische Gelatinen besitzen ein mittleres Molekulargewicht von etwa 100.000 bis 200.000 Dalton, einen sogenannten Bloomwert (Gelstärke) von etwa 260-280 g, vorzugsweise eine Viskosität von mehr als 5 mPas und kontrollierte Calciumwerte von 0 bis etwa 4000 ppm. Typischerweise weisen fotographische Gelatinen hohe Transmissionswerte auf, besitzen somit eine geringe Eigenfärbung, was vorteilhaft für die Produktion von Faserverbundwerkstoffen ist, die im Sichtbereich des Anwenders liegen (z.B.: Sichtcarbon). Die photographische Gelatine kann z.B. zusätzlich mit sogenannten Kollagenpeptiden kombiniert werden. Hierbei handelt es sich um hydrolysierte Gelatinen mit kleinerem Molekulargewicht von etwa 1500 bis 5000 Dalton. Durch die Zugabe dieser kurzkettigen Proteine wird die Penetration des Matrixmaterials in das Fasermaterial verbessert.

Durch die Kombination von Gelatine als Hauptbestandteil des Matrixmaterials und einem Fasermaterial wird ein umweltfreundliches, recycelfähiges und sehr gut biologisch abbaubares Faserverbundformteil erhalten, das sicher und toxikologisch unbedenklich in der Anwendung und zudem aufgrund des geringen Rohstoffpreises für Gelatine kostengünstig ist. Durch die Verwendung des nachwachsenden Rohstoffes Gelatine ist das Faserverbundformteil ferner nachhaltig in der Herstellung und hat damit eine hohe Marktakzeptanz.

Es sei angeführt, dass sich das vorstehend beschriebene Verfahren zur Herstellung des erfindungsgemäßen Faserverbundformteils eignet.

Eine vorteilhafte Weiterbildung des erfindungsgemäßen Faserverbundformteils sieht vor, dass das Matrixmaterial aus Gelatine besteht. Die bedeutet, dass als einziges Matrixmaterial Gelatine vorliegt, übliche Additive können aber enthalten sein. Hierdurch wird die biologische Abbaubarkeit und Recycelfähigkeit des Faserverbundformteils maximiert.

Als bevorzugtes Fasermaterial wird ein Kohlenstofffasermaterial eingesetzt, da dieses sehr gut von dem gelatinehaltigen Matrixmaterial benetzt wird und somit ein Faserverbundformteil mit herausragenden mechanischen Eigenschaften erhalten wird.

Das Faserverbundformteil findet insbesondere im Kraftfahrzeugbau Anwendung und ist hierzu als Kraftfahrzeugbauteil ausgebildet. Weitere Anwendungen des erfindungsgemäßen Faserverbundformteils finden sich z.B. im Flugzeugbau und im Bahnfahrzeugbau.

Ferner erfindungsgemäß wird auch die Verwendung von Gelatine als Matrixmaterial zur Herstellung von Faserverbundformteilen angegeben.

Weitere Einzelheiten, Merkmale und Vorteile der Erfindung ergeben sich aus der nachfolgenden Beschreibung und der Figur. Es zeigt:

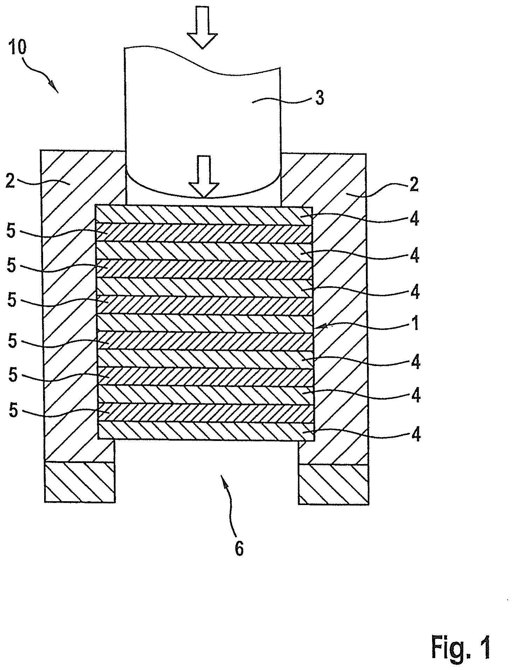

- Figur 1: eine schematisierte Darstellung des Verfahrens gemäß einer vorteilhaften Ausführungsform der Erfindung.

Die vorliegende Erfindung wird anhand eines Ausführungsbeispiels im Detail erläutert. In Figur 1 sind nur die hier interessierenden Aspekte des erfindungsgemäßen Verfahrens zur Herstellung eines Faserverbundformteils dargestellt, alle übrigen Elemente sind der Übersichtlichkeit halber weggelassen.

Im Detail zeigt Figur 1 schematisch einen Schnitt durch ein Tiefziehwerkzeug 10, das in dieser Ausführungsform zur Herstellung eines Faserverbundformteils verwendet wird. Das Tiefziehwerkzeug 10 umfasst zwei Seitenwerkzeuge 2, die einen Lagenstapel 1 zwischen sich halten und einen Stempel 3, der bei Bewegung in Richtung der Pfeile eine Presskraft auf den Lagenstapel 1 ausübt. Hierdurch wird der Lagenstapel 1 in einen Umformbereich 6 zwischen den Seitenwerkzeugen 2 gedrückt. Der Lagenstapel 1 wird dadurch umgeformt und in die gewünschte Endform umgestaltet.

Der Lagenstapel 1 besteht in dieser Ausführungsform aus sieben Lagen eines gelatinehaltigen Matrixmaterials 4 und sechs Lagen eines Fasermaterials 5, die abwechselnd übereinander gestapelt angeordnet sind. Lagen des gelatinehaltigen Matrixmaterials 4 bilden dabei die äußeren, umgebenden Lagen. Das gelatinehaltige Matrixmaterial ist vorteilhaft in Form einer Folie ausgebildet.

Das Tiefziehwerkzeug 10 ist beheizbar. So kann der Lagenstapel 1 vor dem Absenken des Stempels 3 auf eine Temperatur erwärmt werden, bei der das gelatinehaltige Matrixmaterial schmilzt. Das geschmolzene Matrixmaterial 4 penetriert sodann in die Fasermateriallagen 5 und durchtränkt diese. Durch Aufbringung einer Presskraft auf den Lagenstapel 1 durch den Stempel 3 wird ein Umformen unter Ausbildung eines homogenen Faserverbundformteils in gewünschter Form ermöglicht.

Durch erneutes bzw. weiteres Erhöhen der Temperatur des Werkzeugs, wird das gelatinehaltige Matrixmaterial ausgehärtet, wodurch das Faserverbundformteil seine endgültige, dauerhafte Form erhält.

### Bezugszeichenliste:

- 1: Lagenstapel
- 2: Seitenwerkzeug
- 3: Stempel
- 4: Lage des gelatinehaltigen Matrixmaterials
- 5: Lage des Fasermaterials
- 6: Umformbereich
- 10: Tiefziehwerkzeug

## Patentansprüche

1. Verfahren zur Herstellung eines Faserverbundformteils umfassend die Schritte:
- Aufbringen eines gelatinehaltigen Matrixmaterials auf ein Fasermaterial, wobei das gelatinehaltige Matrixmaterial fotografische Gelatine enthält, die ein mittleres Molekulargewicht von etwa 100.000 bis 200.000 Dalton, einen Bloomwert von etwa 260 bis 280 g und kontrollierte Calciumwerte von 0 bis etwa 4000 ppm aufweist,
- Umformen des mit Matrixmaterial versehenen Fasermaterials und
- Härten des mit Matrixmaterial versehenen Fasermaterials.

2. Verfahren nach Anspruch 1, **dadurch gekennzeichnet, dass** das gelatinehaltige Matrixmaterial in Form eines Pulvers, einer Lösung, einer Dispersion oder einer Folie, insbesondere in Form einer Folie, aufgebracht wird.

3. Verfahren nach Anspruch 1 oder 2, **dadurch gekennzeichnet, dass** das Aufbringen des gelatinehaltigen Matrixmaterials auf das Fasermaterial durch abwechselndes übereinander Schichten von Fasermateriallagen (4) und Lagen des gelatinehaltigen Matrixmaterials (5) ausgeführt wird.

4. Verfahren nach einem der vorhergehenden Ansprüche, **dadurch gekennzeichnet, dass** das Umformen durch Tiefziehen ausgeführt wird.

5. Verfahren nach einem der vorhergehenden Ansprüche, **dadurch gekennzeichnet, dass** das Matrixmaterial vor dem Umformen bei 30°C bis 80°C aufgeschmolzen wird, insbesondere bei einer Temperatur zwischen 50 °C und 70 °C, so dass das Matrixmaterial das Fasermaterial penetriert.

6. Verfahren nach einem der vorhergehenden Ansprüche, **dadurch gekennzeichnet, dass** das Härten bei einer Temperatur von bis zu 300 °C, insbesondere bei einer Temperatur zwischen 150 °C und 280 °C, ausgeführt wird.

7. Faserverbundformteil, insbesondere Tiefziehfaserverbundformteil, umfassend ein Fasermaterial und ein Matrixmaterial, **dadurch gekennzeichnet, dass** das Matrixmaterial fotografische Gelatine, die ein mittleres Molekulargewicht von etwa 100.000 bis 200.000 Dalton, einen Bloomwert von etwa 260 bis 280 g und kontrollierte Calciumwerte von 0 bis etwa 4000 ppm aufweist, enthält.

8. Faserverbundformteil nach Anspruch 7, **dadurch gekennzeichnet, dass** das Matrixmaterial aus fotografischer Gelatine besteht.

9. Faserverbundformteil nach Anspruch 7 oder 8, **dadurch gekennzeichnet, dass** das Fasermaterial ein Kohlenstofffasermaterial ist.

10. Verwendung von fotografischer Gelatine, die ein mittleres Molekulargewicht von etwa 100.000 bis 200.000 Dalton, einen Bloomwert von etwa 260 bis 280 g und kontrollierte Calciumwerte von 0 bis etwa 4000 ppm aufweist, als Matrixmaterial zur Herstellung von Faserverbundformteilen.

## Claims

1. Method for producing a fiber composite molding comprising the steps:
- applying a gelatin-containing matrix material to a fiber material, the gelatin-containing matrix material containing photographic gelatin, which has an average molecular weight of about 100,000 to 200,000 Dalton, a Bloom value of about 260 to 280 g and controlled calcium values of 0 to about 4000 ppm,
- reshaping the fiber material provided with matrix material and
- curing the fiber material provided with matrix material.

2. The method according to claim 1, **characterized in that** the gelatin-containing matrix material is applied in the form of a powder, a solution, a dispersion or a film, in particular in the form of a film.

3. The method according to claim 1 or 2, **characterized in that** the application of the gelatin-containing matrix material to the fiber material is carried out by alternately stacking layers of fiber material layers (4) and layers of the gelatin-containing matrix material (5).

4. The method according to any one of the preceding claims, **characterized in that** the reshaping is carried out by deep drawing.

5. The method according to any one of the preceding claims, **characterized in that** the matrix material is melted before reshaping at 30 °C to 80 °C, in particular at a temperature between 50 °C and 70 °C, so that the matrix material penetrates the fiber material.

6. The method according to any one of the preceding claims, **characterized in that** the curing is carried out at a temperature of up to 300 °C, in particular at a temperature between 150 °C and 280 °C.

7. Fiber composite molding, in particular deep-drawing fiber composite molding, comprising a fiber material and a matrix material, **characterized in that** the matrix material contains photographic gelatin, which has an average molecular weight of about 100,000 to 200,000 Dalton, a Bloom value of about 260 to 280 g and controlled calcium values of 0 to about 4000 ppm.

8. Fiber composite molding according to claim 7, **characterized in that** the matrix material consists of photographic gelatin.

9. Fiber composite molding according to claim 7 or 8, **characterized in that** the fiber material is a carbon fiber material.

10. Use of photographic gelatin, which has an average molecular weight of about 100,000 to 200,000 Dalton, a Bloom value of about 260 to 280 g and controlled calcium values of 0 to about 4000 ppm, as a matrix material for the production of fiber composite moldings.

## Revendications

1. Procédé pour fabriquer une pièce moulée composite renforcée par des fibres comprenant les étapes :
- d'application d'un matériau matriciel contenant de la gélatine sur un matériau fibreux, dans lequel le matériau matriciel contenant de la gélatine contient de la gélatine photographique, qui présente une masse moléculaire moyenne d'environ 100 000 à 200 000 Dalton, une valeur de Bloom d'environ 260 à 280 g et des valeurs de calcium contrôlées de 0 à 4 000 ppm,
- le façonnage du matériau fibreux pourvu du matériau matriciel et
- le durcissement du matériau fibreux pourvu du matériau matriciel.

2. Procédé selon la revendication 1, **caractérisé en ce que** le matériau matriciel contenant de la gélatine est appliqué sous forme d'une poudre, d'une solution, d'une dispersion ou d'une feuille, en particulier sous forme d'une feuille.

3. Procédé selon la revendication 1 ou 2, **caractérisé en ce que** l'application du matériau matriciel contenant de la gélatine sur le matériau fibreux est réalisée par l'empilement tour à tour les unes sur les autres de couches de matériau fibreux (4) et de couches du matériau matriciel (5) contenant de la gélatine.

4. Procédé selon l'une quelconque des revendications précédentes, **caractérisé en ce que** le façonnage est réalisé par emboutissage.

5. Procédé selon l'une quelconque des revendications précédentes, **caractérisé en ce que** le matériau matriciel est fondu avant le façonnage à 30 °C à 80 °C, en particulier à une température comprise entre 50 °C et 70 °C, de sorte que le matériau matriciel pénètre dans le matériau fibreux.

6. Procédé selon l'une quelconque des revendications précédentes, **caractérisé en ce que** le durcissement est réalisé à une température allant jusqu'à 300 °C, en particulier à une température comprise entre 150 °C et 280 °C.

7. Pièce moulée composite renforcée par des fibres, en particulier pièce moulée composite renforcée par des fibres emboutie, comprenant un matériau fibreux et un matériau matriciel, **caractérisée en ce que** le matériau matriciel contient de la gélatine photographique, qui présente une masse moléculaire moyenne d'environ 100 000 à 200 000 Dalton, une valeur de Bloom d'environ 260 à 280 g et des valeurs de calcium contrôlées de 0 à environ 4 000 ppm.

8. Pièce moulée composite renforcée par des fibres selon la revendication 7, **caractérisée en ce que** le matériau matriciel est constitué de gélatine photographique.

9. Pièce moulée composite renforcée par des fibres selon la revendication 7 ou 8, **caractérisée en ce que** le matériau fibreux est un matériau à fibres de carbone.

10. Utilisation d'une gélatine photographique, qui présente une masse moléculaire moyenne d'environ 100 000 à 200 000 Dalton, une valeur de Bloom d'environ 260 à 280 g et des valeurs de calcium contrôlées de 0 à environ 4 000 ppm, comme matériau matriciel pour la fabrication de pièces moulées composites renforcées par des fibres.
